# EUROPEAN PATENT SPECIFICATION

(11) **EP 3 130 578 B1**
(45) Date of publication and mention of the grant of the patent: **13.03.2019**
(21) Application number: 15181076.9
(22) Date of filing: 14.08.2015
(51) Int. Cl.: C05G 3/08

(54) **FERTILIZING COMPOSITION WHICH INCLUDES AN INHIBITOR OF UREASE ACTIVITY**
DÜNGEZUSAMMENSETZUNG MIT EINEM HEMMER DER UREASEAKTIVITÄT
COMPOSITION FERTILISANTE QUI COMPREND UN INHIBITEUR DE L'ACTIVITÉ URÉASE

(43) Date of publication of application: 15.02.2017
(73) Proprietor: FERTINAGRO BIOTECH, S.L., 44195 Teruel (ES)
(72) Inventor: ATARÉS REAL, Sergio, 44195 TERUEL (ES); ROMERO LÓPEZ, Joaquín, 44195 TERUEL (ES); SALAET MADORRAM, Ignasi, 44195 TERUEL (ES); COLOM TOMÁS, Elena, 44195 TERUEL (ES); FERRER GINÉS, Maria, 44195 Teruel (ES); NARANJO OLIVERO, Miguel Ángel, 44195 Teruel (ES)
(74) Representative: González López-Menchero, Álvaro Luis

(56) References cited:
- US-A1- 2014 274 707
- Sezai Türkel ET AL: "isolation and characterization of new Metschnikowia pulcherrima starins as Producers of the antimicrobial pigment pulcherrimin", , 8 January 2009 (2009-01-08), pages 405-410, XP055252106, Retrieved from the Internet: URL:http://www.degruyter.com/dg/viewarticl e.fullcontentlink:pdfeventlink/$002fj$002f znc.2009.64.issue-5-6$002fznc-2009-5-618$0 02fznc-2009-5-618.pdf?t:ac=j$002fznc.2009. 64.issue-5-6$002fznc-2009-5-618$002fznc-20 09-5-618.xml [retrieved on 2016-02-22]
- SEZAI TÜRKEL ET AL: "Biocontrol Activity of the Local Strain of Metschnikowia pulcherrima on Different Postharvest Pathogens", BIOTECHNOLOGY RESEARCH INTERNATIONAL, vol. 12, no. 3, 1 January 2014 (2014-01-01), pages 394-6, XP055252113, US ISSN: 2090-3138, DOI: 10.1007/s12223-013-0290-2
- SISTI MAURIZIO ET AL: "Antifungal properties of the humanMetschnikowiastrain IHEM 25107", FOLIA MICROBIOLOGICA, PRAQUE, CZ, vol. 59, no. 3, 24 November 2013 (2013-11-24), pages 263-266, XP035323980, ISSN: 0015-5632, DOI: 10.1007/S12223-013-0290-2 [retrieved on 2013-11-24]
- LUZIA V. MODOLO ET AL: "An overview on the potential of natural products as ureases inhibitors: A review", JOURNAL OF ADVANCED RESEARCH, vol. 6, no. 1, 1 January 2015 (2015-01-01) , pages 35-44, XP055252123, AMSTERDAM, NL ISSN: 2090-1232, DOI: 10.1016/j.jare.2014.09.001

## Description

In general the present invention relates to a fertilizing composition which includes an inhibitor of urease activity.

More specifically, the invention provides a fertilizing composition with controlled availability which includes as an inhibitor of urease activity a pigment of natural origin, pulcherrimin, an iron chelate derived from pulcherriminic acid, preferably synthetized in a natural manner by yeast of the *Metschnikowia pulcherrima* species.

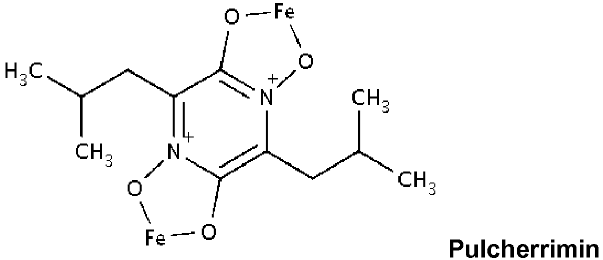

Nitrogen is the most necessary and used nutrient in crops. Nitrogen, once applied to the ground, undergoes a series of transformations, causing the absorption by the crops or the loss of the nutrient for different reasons, such as loss through emissions to the atmosphere of nitrogen oxides and ammonia, loss through leaching processes or loss due to the erosion of the soils.

Thus research has been carried out aimed at developing more efficient fertilizers such as those developed in the patents, ES 2 204 307 A1; ES 2 264 386 B1; WO 2001072665 A1; WO 2007/132032; WO 2006 125836 A1.

Urea constitutes one of the most used nitrogenated fertilizers in the world due principally to its high nitrogen content (46%), its low cost, its solubility in water and its easy handling. However, it has a low output and loss of efficiency of the fertilizer due to leaching of the nitrogen in the form of nitric and due to losses by volatilization of the ammoniacal nitrogen due to the rapid hydrolysis which the urea undergoes when being applied to the ground.

(NH₂)₂CO + H₂O → CO₂ + 2NH₃

Hydrolysis reaction of urea

The ammonia produced enters into equilibrium with the moisture of the original ground ammonium ions: NH₃ + H₂O → NH⁴⁺ + OH⁻.

This hydrolysis is catalyzed by the urease enzyme, a metalloenzyme, the active site of which is composed of a dimer of Ni (II).

The action of this enzyme is very rapid and causes a high degree of loss of efficacy of the supplied fertilizer. The ammonia released can have an excessively high concentration in proximity to the roots of the young plants, causing intoxication thereof, in addition to the release thereof to the environment, with the problems that this can entail.

Water and spring contamination due to the presence of nitrates constitutes one of the most significant environmental problems of developed countries. This fact, normally associated with an excessive use of nitrogenated fertilizers, has caused the enactment of specific laws with the aim of regulating the maximum quantity of nitrogenated units which the farmer can apply depending on the degree of contamination in his specific region. In this context, any research aimed at developing more efficient fertilizers and with fewer risks of environmental contamination is of great interest.

Among the products which have demonstrated high efficacy in this sense, the inhibitors of the nitrogenation processes and of the hydrolysis of urea stand out (Hauck R D 1985, Slow-release and bioinhibitor-amended nitrogen fertilizers", "Fertilizer technology and use", Ed. O P Engelstad, pp 293-322, Soil Science Society of America, Madison). In relation to the inhibitors of the hydrolysis of the urea, a large quantity of molecules has been developed both of natural origin (for example Baughman and Wozniak., US5549728; Seiyaku, JP8019595) and of synthetic origin (for example Cheng and col., US5770771; Peacock and col., US5352265; Radel, US4932992).

Similarly, there exists on the market a commercial product which contains the inhibitor of urease known as NBTP, triamide of n-(n-butyl) thiophosphoric acid, highly effective for inhibiting the hydrolysis of urea in soils. However, NBTP has two significant problems:
1. It is a highly effective product for inhibiting the activity of ureases both of microorganism origin (associated with the activity in soils) and of plant origin. This fact makes the use thereof in fertirrigation potentially dangerous since it can significantly affect the correct metabolism of the urea in the interior of the plant.
2. Different studies have revealed that the product, once included in the fertilizer containing urea, has an average life in relation to the activity which is between 3 weeks and 3 months, which makes the use thereof very difficult in the manufacturing of fertilizers, the storage period of which is greater than the expiry date of said molecule.

In this sense, the search for new molecules with the capacity to selectively inhibit the ureases associated with microorganisms, being less active in the ureases present in plants and which are sufficiently stable in order to maintain the activity thereof over long periods of time is of great interest.

Surprisingly, the applicant has now found that the pigment of natural origin, pulcherrimin, an iron chelate derived from pulcherriminic acid, synthetized in a natural manner by the yeast of the *Metschnikowia pulcherrima* species, has the property to inhibit the urease enzyme and thus the nitrification which generates losses in the availability of nitrogen on the part of the plants. The extraction of pulcherrimin from Metschnikowio pulcherrima strains is known from SEZAI TÜRKEL ET AL: "isolation and characterization of new Metschnikowia pulcherrima starins as Producers of the antimicrobial pigment pulcherrimin", 8 January 2009, pages 405-410; from SEZAI TÜRKEL ET AL: "Biocontrol Activity of the Local Strain of Metschnikowia pulcherrima on Different Postharvest Pathogens",BIOTECHNOLOGY RESEARCH INTERNATIONAL, vol. 12, no. 3, 1 January 2014, pages 394-6 and from SISTI MAURIZIO ET AL: "Antifungal properties of the human Metschnikowiastrain IHEM 25107",FOLIA MICROBIOLOGICA, PRAQUE, CZ, vol. 59, no. 3, 24 November 2013, pages 263-266, ISSN: 0015-5632, DOI: 10.1007/S12223-013-0290-2.

The object of the present invention is thus a fertilizing composition with controlled availability which includes as an inhibitor of urease activity, pulcherrimin, an iron chelate derived from pulcherriminic acid synthetized in a natural manner by the yeast of the *Metschnikowia pulcherrima (Candida pulcherrimina)* species.

Pulcherrimin is a pigment synthetized by certain species of *Candida pulcherrimina* which grow over mediums which contain ferric salts (MacDonald, Biosynthesis of pulcherriminic acid, The Biochemical journal 96, 533-538, 1965). Cook and Slater (1954) cited by (MacDonald, 1965) demonstrated that this pigment was the ferric salt of a dibasic acid, which was called pulcherriminic acid, a hydroxamic acid derivative formed by cyclic oxidative aromatization (L-leucil-L-leucil) (Kluyver AJ, van der Walt JP, van Triet AJ (1953), Pulcherrimin, The Pigment of Candida Pulcherrima, Proceedings of the National Academy of Sciences of the United States of America 39, 583-593).

In the search for ureases inhibitors, the selection of this active substance is due to the fact that some studies pointed to the fact that the urease enzyme could be inhbitied by molecules derived from hydroxamic acid (Luzia V. Modolo, Aline X. de Souza, Lívia P. Horta, Dóbora P. Araujo, Ângelo de Fátima, An overview on the potential of natural products as ureases inhibitors: A review, Journal of Advanced Research (2015) 6, 35-44); Z. Amtul, Atta-ur-Rahman, R.A. Siddiqui and M.I: Choudhary, Chemistry and Mechanism of Urease Inhibition, Current Medicinal Chemistry, 2002, 9, 1323-1348). The use of this active inhibiting substance of the urease allows a fertilizing composition to be obtained of natural origin and which is completely biodegradable.

The invention provides a fertilizing composition with controlled availability which includes as an inhibitor of urease activity, the pigment of natural origin, pulcherrimin.

In the present invention, the term "fertilizing composition" relates to any organic or inorganic, natural or synthetic composition, which supplies plants with one or a number of the indispensable nutritional elements for the normal plant development thereof, commonly primary macroelements (N, P, K), secondary macroelements (Ca, Mg, S) as well as microelements (B, Cl, Co, CU, Fe, Mn, Mo and Zn). Thus the term, "fertilizing composition" encompasses in particular simple mineral fertilizers (contained in only one of the following macroelements: nitrogen, phosphorous or potassium) containing nitrogen and complexes (contained in more than one of the following macroelements: nitrogen, phosphorous or potassium) containing nitrogen, organic fertilizers, organo-minerals, etc. such as N fertilizers, NP fertilizers, NK fertilizers or NPK fertilizers, the nitrogen of the fertilizer being able to be of ureic origin or of other types of nitrogen (organic, inorganic).

Preferably, the fertilizing composition of the present invention is in granular form.

Preferably, the granulates are coated by means of a coating medium based on humic extracts.

Preferably, the pulcherrimin as active inhibitor of urease activity is present in the coating medium based on humic extracts as a delivery medium.

The humic acids are complex macromolecular groupings which form part of the organic material of the soil and which improve the absorption of macronutrients, thus stimulating plant growth. The extraction, characterization and properties of the humic acids of leonardite are described for example in documents, US3398186 A, US3544296 A or EP0284339 B1.

The use of humic substances extracted from leonardite for the delivery of pulcherrimin, provides it with excellent properties, such as:
- High capacity for complexing iron, which allows the pulcherrimin to be protected from the iron, preventing it becoming inactive.
- Capacity for forming micelles, which protect against degradation both of the active substance and the fertilizing composition which they are covering.
- Low vapor pressure and high capacity for moisture absorption, a reason for which a drying step is not necessary subsequent to the application thereof on solid surfaces.

In the invention, pulcherrimin is obtained from the previously mentioned yeast, *Metschnikowia pulcherrima.*

Therefore, in a second aspect, the invention relates to a process for obtaining a fertilizer composition comprising pulcherrimin extract from a culture of *Metschnikowia pulcherrima* yeast, where the pulcherrimin extract obtained contains between 0.1 and 2% by weight of pulcherrimin.

The process for obtaining the fertilizing composition comprises the step of producing a pulcherrimin extract from a culture of *Metschnikowia pulcherrima* yeast including the following steps:
a. Preparing a culture medium suitable for *growing the* yeast adjusted to pH 5.5 and at a temperature of 28° C.
In a preferred embodiment, said culture medium has the following composition (the percentages are expressed by weight):

| | |
|---|---|
| Glycerol | 2-10% |
| Magnesium sulfate | 0.1-5% |
| Phosphoric acid | 1-5% |
| Calcium carbonate | 0.01-1% |
| Anti-foaming agent | 0.01-1% |
| PMT1 | 0.1-10% |

| PMT1 composition | |
|---|---|
| | g/l |
| CuSO₄·5H₂O | 1-10 |
| Nal | 0.01-1 |
| MnSO₄·H₂O | 1-5 |
| NaMoO₄·2H₂O | 0.05-4 |
| H₃BO₃ | 0.05-4 |
| CoCl₂ | 0.1-1 |
| ZnCl₂ | 1-50 |
| FeSO₄·7H₂O | 10-80 |
| H₂SO₄ (96%) | 1-20 |

b. Inoculating the *Metschnikowia pulcherrima* yeast (V6 strain, deposited in the Spanish collection of type cultures with the reference CECT 13098) at a constant pressure of 0.4 bar, complementing the medium with glycerol supplemented with amino acids.
c. Extracting the broth from the reactor, separating the bodies of the yeast from the liquid, clarifying microfiltration of the supernatant obtained and optionally concentrating by means of inverse osmosis.
d. inclusion of the product resulting from a-c with a nitrogen source.

The clarified broth without concentration is the pulcherrimin extract to be used as an inhibitor in the fertilizing composition of the invention, having a pulcherrimin content of between 0.1 % and 2%.

In a preferred embodiment of the invention, the proportion of the pulcherrimin extract and the delivery medium is between 1-4: 1-10. In a particularly preferred embodiment, this proportion is 1:1, 1:9, 3:7 or 4:1.

In another embodiment, the fertilizing composition contains between 0.1 and 10% pulcherrimin extract and between 0.1 and 10% by weight of the delivery medium, the rest of the components being up to 100% by weight urea or other nitrogen sources.

In order to obtain the pulcherrimin extract from a culture of *Metschnikowia pulcherrima* yeast, firstly a culture medium is prepared, the composition of which is detailed below:

| | |
|---|---|
| Glycerol | 2-10% |
| Magnesium sulfate | 0.1-5% |
| Phosphoric acid | 1-5% |
| Calcium carbonate | 0.01-1% |
| Anti-foaming agent | 0.01-1% |
| PMT1 | 0.1-10% |

| PMT1 composition | |
|---|---|
| | g/l |
| CuSO₄·5H₂O | 1-10 |
| Nal | 0.01-1 |
| MnSO₄·H₂O | 1-5 |
| NaM00₄·2H₂O | 0.05-4 |
| H₃BO₃ | 0.05-4 |
| CoCl₂ | 0.1-1 |
| ZnCl₂ | 1-50 |
| FeSO₄·7H₂O | 10-80 |
| H₂SO₄ (96%) | 1-20 |

Once the culture medium has been prepared, the pH is adjusted to 5.5 with ammonia water. Subsequently, the culture medium is sterilized in autoclave at 121° C and 1 bar of pressure for 15 minutes. The culture medium is tempered at 28° C and is maintained at this temperature for the entire production process. The inoculation of the *Metschnikowia pulcherrima* yeast (V6 strain) deposited in the Spanish collection of type cultures with the reference CECT 13098 is carried out. The pH is adjusted to 5.5 by means of the controlled addition of ammonia water. The aeration is maintained between 0.5 and 2 vvm for the entire process. The pressure within the reactor is constant and at 0.4 bar. Once the glycerol has terminated in the initial culture medium (the time at which the dissolved oxygen concentration is discharged), the temperature is reduced to 25° C and an overfeeding is carried out by means of the incorporation of a continuous flow of 0.0045 volumes/hour of a rich medium formed by glycerol supplemented with 2% of amino acids. The broth is extracted from the reactor, it is decanted by centrifuging to separate the bodies of the yeast from the liquid, a clarifying microfiltration of the supernatant obtained from the previous step is carried out, lastly, a concentration can be realized by means of inverse osmosis. The clarified broth without concentration is the pulcherrimin extract to be used as an inhibitor in the fertilizing composition of the invention (the pulcherrimin content is between 0.1% and 2%).

As has been mentioned previously, the delivery medium of the pulcherrimin extract is also a covering of natural origin obtained from humic acids, preferably leonardite extracts.

One of the most used techniques for characterizing coatings is infrared spectroscopy since it allows the changes, which occur to be monitored, showing the absorption bands of the functional groups of the polymeric molecules and allowing the degree of degradation of the same to be observed.

In this case, the spectrums were obtained using a Fournier transform infrared spectroscopy (FT-IR). This technique also allows the type of interactions existing between the covering and the nucleus thereof to be known.

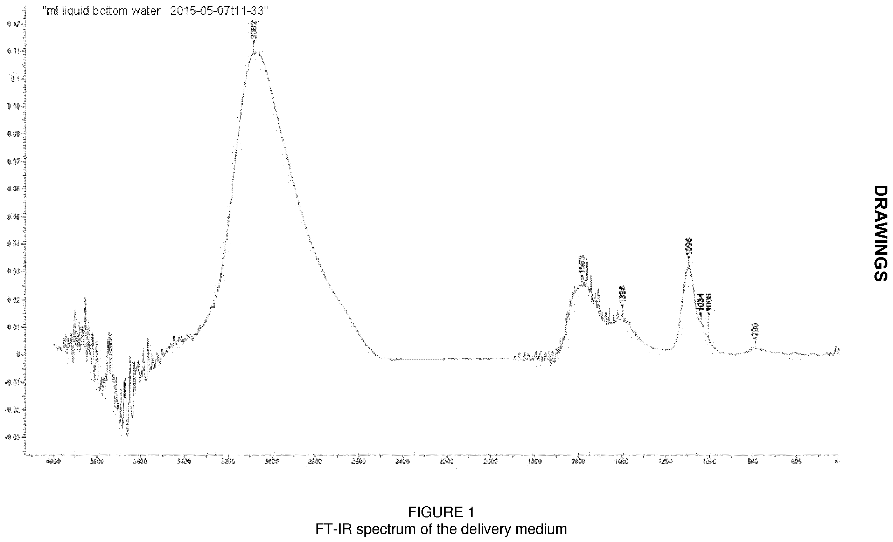

In figure 1, the Fournier transform infrared spectroscopy obtained for the delivery medium is shown, where the bands of the characteristic functional groups of the humic acids can be seen, such as alcohols, acidic groups, aromatic systems, ketones or phenols.

The extraction method for obtaining this delivery medium of the pulcherrimin extract involves a double extraction. Firstly, the first extraction is carried out, which is carried out by adding potash to an aqueous solution of a leonardite with known characteristics. Secondly, the humic substances are precipitated on an acidic medium, which is achieved by adding sulfuric acid up to a pH of between 0 and 2. Lastly, they are redissolved adding potassium and pyrophosphate carbonate up to a pH of about 10.

In order to better present the content of the present invention, a series of examples are included below, which are in no case to be considered as limiting the same.

The following granular fertilizing compositions were prepared including urea as a nitrogen source and the pulcherrimin extract obtained as previously described as the inhibitor of the urease. In the examples, 1 to 6, the pulcherrimin extract is supplied to a granular fertilizing composition by means of the inclusion thereof in the delivery medium based on humic acids. For comparative purposes, in the examples 7 and 8, the granular fertilizing composition includes the pulcherrimin extract directly via the nitrogen source.

### Example 1: Fertilizing composition according to the invention

| Component | % by weight |
|---|---|
| Urea | 99.0 |
| Pulcherrimin extract | 0.1 |
| Delivery medium | 0.9 |

### Example 2: Fertilizing composition according to the invention

| Component | % by weight |
|---|---|
| Urea | 99.0 |
| Pulcherrimin extract | 0.3 |
| Delivery medium | 0.7 |

### Example 3: Fertilizing composition according to the invention

| Component | % by weight |
|---|---|
| Urea | 99.0 |
| Pulcherrimin extract | 0.5 |
| Delivery medium | 0.5 |

### Example 4: Fertilizing composition according to the invention

| Component | % by weight |
|---|---|
| Urea | 99.0 |
| Pulcherrimin extract | 0.8 |
| Delivery medium | 0.2 |

### Example 5: Fertilizing composition according to the invention

| Component | % by weight |
|---|---|
| Urea | 80.0 |
| Pulcherrimin extract | 10.0 |
| Delivery medium | 10.0 |

### Example 6: Fertilizing composition according to the invention

| Component | % by weight |
|---|---|
| Urea | 90.0 |
| Pulcherrimin extract | 5.0 |
| Delivery medium | 5.0 |

### Example 7: Fertilizing composition according to the invention

| Component | % by weight |
|---|---|
| Urea | 99.0 |
| Pulcherrimin extract | 1.0 |

### Example 8: Fertilizing composition according to the invention

| Component | % by weight |
|---|---|
| Urea | 95.0 |
| Pulcherrimin extract | 5.0 |

### Example 9:

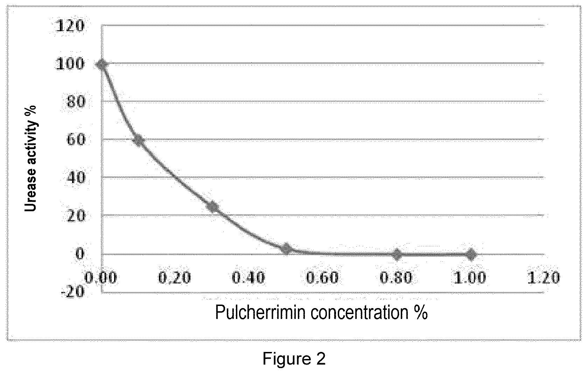

The inhibiting capacity of the urease activity of the fertilizing compositions of the invention was studied in various soil samples. To this end, the activity of the urease enzyme was measured and the variation thereof was observed as a function of the concentration of the pulcherrimin extract. The results are shown in figure 2. As can be observed in figure 2, the pulcherrimin extract effectively reduces the activity of the urease.

### Example 10:

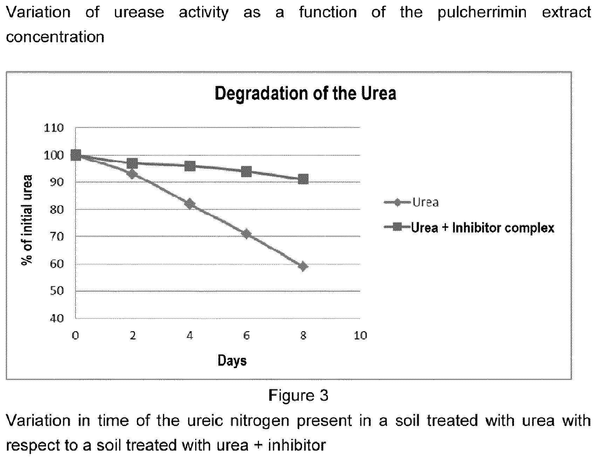

With the aim of assessing the influence of the delivery medium based on humic acids over the activity of the urease, the variation in time of the ureic nitrogen present in a soil treated with urea was studied with respect to a soil treated with urea with 0.5% pulcherrimin extract + 0.5% delivery medium (example 3). The results are shown in figure 3. As can be observed in figure 3, the quantity of urea present in the soil rapidly reduces in a few days, while this reduction is much slower in the case of the urea with the pulcherrimin inhibitor in the delivery medium.

## Claims

1. A fertilizing composition which comprises a nitrogen source, **characterized in that** it includes pulcherrimin extract as an inhibitor of urease activity.

2. The fertilizing composition according to claim 1, **characterized in that** it is in granular form.

3. The fertilizing composition according to claim 2, **characterized in that** the granulates are coated by means of a coating medium based on humic extracts.

4. The fertilizing composition according to claim 3, **characterized in that** the pulcherrimin extract as an inhibitor of urease activity is present in the coating medium based on humic extracts as a delivery medium.

5. The fertilizing composition according to claim 4, **characterized in that** the proportion between the pulcherrimin extract and the delivery medium is between 1-4: 1-1 0 by weight.

6. The fertilizing composition according to claim 5, **characterized in that** the proportion between the pulcherrimin extract and the delivery medium is 1:1, 1:9, 3:7 or 4:1 by weight.

7. The fertilizing composition according to claim 4, **characterized in that** the fertilizing composition contains between 0.1 and 10% by weight of pulcherrimin extract and between 0.1% and 10% by weight of delivery medium, the rest of the components being up to 100% by weight urea or other nitrogen sources.

8. The fertilizing composition according to claim 1, **characterized in that** the pulcherrimin extract is obtained in a natural manner from yeast of the Metschnikowia pulcherrima (Candida pulcherrimina) species.

9. A process for obtaining a fertilizing composition comprising the step of producing a pulcherrimin extract from a Metschnikowia pulcherrima yeast culture according to claims 1-8, **characterized in that** it includes the following steps:
a. Preparing a culture medium suitable for growing the yeast adjusted to pH 5.5 and at a temperature of 28°C;
b. Inoculating the Metschnikowia pulcherrima yeast (V6 strain, deposited in the Spanish collection of type cultures with the reference CECT 13098) at a constant pressure of 0.4 bar, complementing the medium with glycerol supplemented with amino acids;
c. Extracting the broth from the reactor, separating the bodies of the yeast from the liquid, clarifying microfiltration of the supernatant obtained and optionally concentrating by means of inverse osmosis;
d. inclusion of the product resulting from a-c with a nitrogen source.

10. The process according to claim 9, **characterized in that** the clarified broth without concentration is the pulcherrimin extract with a pulcherrimin content of between 0.1% and 2% by weight.

11. The process according to claim 9, **characterized in that** the culture medium of step "a" has the following composition by weight: glycerol 2-10%, magnesium sulfate 0.1-5%, phosphoric acid 1-5%, calcium carbonate 0.01-1%, anti-foaming agent 0.01-1% and PMT1 0.1-10%, PMT1 being: CuSO4 ·5H2 O 1-10 g/l, Nal 0.01-1 g/l, MnSO4 ·H2 O 1-5 g/l, NaMoO4 ·2H2 O 0.05-4 g/l, H3 BO3 0.05-4 g/l, CoCl2 0.1-1 g/l, ZnCl2 1-50 g/l, FeSO4 ·7H2 O 10-80 g/l and H2 SO4 (96%) 1-20 g/l.

12. A use of a pulcherrimin extract as an inhibitor of the urease activity in a fertilizing composition N, NP, NK or NPK.

13. The use according to claim 12, **characterized in that** the nitrogen of the fertilizer N, NP, NK or NPK is of ureic origin.

## Patentansprüche

1. Düngezusammensetzung, die eine Stickstoffquelle umfasst, **dadurch gekennzeichnet, dass** sie Pulcherrimin-Extrakt als Inhibitor der Ureaseaktivität beinhaltet.

2. Düngezusammensetzung nach Anspruch 1, **dadurch gekennzeichnet, dass** sie in granularer Form vorliegt.

3. Düngezusammensetzung nach Anspruch 2, **dadurch gekennzeichnet, dass** die Granulate mittels eines Beschichtungsmediums auf Basis von Huminextrakten beschichtet werden.

4. Düngezusammensetzung nach Anspruch 3, **dadurch gekennzeichnet, dass** der Pulcherrimin-Extrakt als Inhibitor der Ureaseaktivität im Beschichtungsmedium auf Basis von Huminextrakten als Abgabemedium vorhanden ist.

5. Düngezusammensetzung nach Anspruch 4, **dadurch gekennzeichnet, dass** das Verhältnis zwischen dem Pulcherrimin-Extrakt und dem Abgabemedium zwischen 1- 4:1-10 nach Gewicht liegt.

6. Düngezusammensetzung nach Anspruch 5, **dadurch gekennzeichnet, dass** das Verhältnis zwischen dem Pulcherrimin-Extrakt und dem Abgabemedium 1:1, 1:9, 3:7 oder 4:1 nach Gewicht beträgt.

7. Düngezusammensetzung nach Anspruch 4, **dadurch gekennzeichnet, dass** die Düngezusammensetzung zwischen 0,1 und 10 Gew.-% Pulcherrimin-Extrakt und zwischen 0,1 und 10 Gew.-% Abgabemedium enthält, wobei der Rest der Bestandteile bis zu 100 Gew.-% Harnstoff oder andere Stickstoffquellen ausmachen.

8. Düngezusammensetzung nach Anspruch 1, **dadurch gekennzeichnet, dass** der Pulcherrimin-Extrakt auf natürliche Weise aus Hefe der Spezies Metschnikowia pulcherrima (Candida pulcherrimina) gewonnen wird.

9. Verfahren zum Erhalten einer Düngezusammensetzung, umfassend den Schritt der Herstellung eines Pulcherrimin-Extrakts aus einer Metschnikowia pulcherrima-Hefekultur nach Anspruch 1-8, **dadurch gekennzeichnet, dass** es folgende Schritte umfasst:
a. Herstellung eines für das Wachstum der Hefe geeigneten Kulturmediums, eingestellt auf einen pH-Wert von 5,5 bei einer Temperatur von 28°C;
b. Inokulation der Metschnikowia pulcherrima-Hefe (Stamm V6, hinterlegt in der spanischen Typ-Kultur-Sammlung mit der Referenz CECT 13098) bei einem konstanten Druck von 0,4 bar, Ergänzen des Mediums mit Glycerin mit Zusatz von Aminosäuren;
c. Extrahieren der Brühe aus dem Reaktor, Trennen der Hefekörper von der Flüssigkeit, Klären durch Mikrofiltration des erhaltenen Überstandes und gegebenenfalls Konzentrieren mittels Umkehr-Osmose;
d. Einschluss des aus a-c resultierenden Produkts mit einer Stickstoffquelle.

10. Verfahren nach Anspruch 9, **dadurch gekennzeichnet, dass** die geklärte Brühe ohne Konzentration der Pulcherrimin-Extrakt mit einem Pulcherrimin-Gehalt zwischen 0,1 Gew.-% und 2 Gew.-% ist.

11. Verfahren nach Anspruch 9, **dadurch gekennzeichnet, dass** das Kulturmedium von Schritt "a" folgende Gewichtszusammensetzung aufweist: Glycerin 2-10 %, Magnesiumsulfat 0,1-5 %, Phosphorsäure 1-5 %, Calciumcarbonat 0,01-1 %, Entschäumungsmittel 0,01-1 % und PMT1 0,1-10 %, wobei PMT1 folgendes ist: CuSO4 ·5H2 O 1-10 g/l, Nal 0,01- 1 g/l, MnSO4 ·H2 O 1-5 g/l, NaMoO4 ·2H2 O 0,05-4 g/l, H3 BO3 0,05-4 g/l, CoCl20,1-1 g/l, ZnCl2 1-50 g/l, FeSO4 ·7H2 O 10-80 g/l und H2 SO4 (96 %) 1-20 g/l.

12. Verwendung eines Pulcherrimin-Extrakts als Inhibitor der Ureaseaktivität in einer Düngezusammensetzung N, NP, NK oder NPK.

13. Verwendung nach Anspruch 12, **dadurch gekennzeichnet, dass** der Stickstoff des Düngemittels N, NP, NK oder NPK seinen Ursprung in Harnstoff hat.

## Revendications

1. Composition fertilisante qui comprend une source d'azote, **caractérisée en ce qu'**elle comprend un extrait de pulcherrimine comme inhibiteur de l'activité de l'uréase.

2. Composition fertilisante selon la revendication 1, **caractérisée en ce qu'**elle est sous la forme de granulés.

3. Composition fertilisante selon la revendication 2, **caractérisée en ce que** les granulés sont enrobés au moyen d'un milieu d'enrobage à base d'extraits humiques.

4. Composition fertilisante selon la revendication 3, **caractérisée en ce que** l'extrait de pulcherrimine comme inhibiteur de l'activité de l'uréase est présent dans le milieu d'enrobage à base d'extraits humiques comme milieu de délivrance.

5. Composition fertilisante selon la revendication 4, **caractérisée en ce que** la proportion entre l'extrait de pulcherrimine et le milieu de délivrance est entre 1-4:1-10 en poids.

6. Composition fertilisante selon la revendication 5, **caractérisée en ce que** la proportion entre l'extrait de pulcherrimine et le milieu de délivrance est 1:1, 1:9, 3:7 ou 4:1 en poids.

7. Composition fertilisante selon la revendication 4, **caractérisée en ce que** la composition fertilisante contient entre 0,1 et 10 % en poids d'extrait de pulcherrimine et entre 0,1 % et 10 % en poids de milieu de délivrance, le reste des composants allant jusqu'à 100 % en poids d'urée ou autres sources d'azote.

8. Composition fertilisante selon la revendication 1, **caractérisée en ce que** l'extrait de pulcherrimine est obtenu de façon naturelle à partir de la levure de l'espèce *Metschnikowia pulcherrima (Candida pulcherrimina).*

9. Procédé pour l'obtention d'une composition fertilisante comprenant l'étape consistant à produire un extrait de pulcherrimine à partir d'une culture de la levure *Metschnikowia pulcherrima* selon les revendications 1-8, **caractérisé en ce qu'**il comporte les étapes suivantes :
a. Préparation d'un milieu de culture apte à faire croître la levure ajustée au pH 5,5 et à une température de 28°C ;
b. Inoculation de la levure *Metschnikowia pulcherrima* (souche V6, déposée dans la collection espagnole de cultures types avec la référence CECT 13098) à une pression constante de 0,4 bars, complétant le milieu avec du glycérol enrichi en aminoacides ;
c. Extraction du bouillon du réacteur, séparation des corps de la levure du liquide, clarification de la microfiltration du surnageant obtenu et optionnellement concentration au moyen d'osmose inverse ;
d. Inclusion du produit provenant de a-c avec une source d'azote.

10. Procédé selon la revendication 9, **caractérisé en ce que** le bouillon clarifié sans concentration est l'extrait de pulcherrimine avec une teneur en pulcherrimine comprise entre 0,1 % et 2 % en poids.

11. Procédé selon la revendication 9, **caractérisé en ce que** le milieu de culture de l'étape « a » a la composition suivante en poids : glycérol 2-10 %, sulfate de magnésium 0,1-5 %, acide phosphorique 1-5 %, carbonate de calcium 0,01-1 %, agent antimoussant 0,01-1 % et PMT1 0,1-10 %, PMT1 étant : CuSO4·5H2 O 1-10 g/l, Nal 0,01- 1 g/l, MnSO4·H2 O 1-5 g/l, NaMoO4·2H2 O 0,05-4 g/l, H3 BO3 0,05-4 g/l, CoCl20,1-1 g/l, ZnCl2 1-50 g/l, FeSO4 ·7H2 O 10-80 g/l et H2 SO4 (96 %) 1-20 g/l.

12. Utilisation d'un extrait de pulcherrimine comme inhibiteur de l'activité de l'uréase dans une composition fertilisante N, NP, NK ou NPK.

13. Utilisation selon la revendication 12, **caractérisée en ce que** l'azote de l'engrais N, NP, NK ou NPK est d'origine uréique.
